# EUROPÄISCHE PATENTANMELDUNG

(11) **EP 1 695 812 A2**
(43) Veröffentlichungstag der Anmeldung: **30.08.2006**
(21) Anmeldenummer: 06003179.6
(22) Anmeldetag: 16.02.2006
(51) Int. Cl.: B29C 49/32, B29C 49/42, B29C 49/04

(54) **Blasformsystem und Verfahren zur Herstellung von Hohlkörpern**

(30) Priorität: 25.02.2005 DE 102005009276
(71) Anmelder: EXTRAPLAST Maschinen GmbH, 53842 Troisdorf / Spich (DE)
(72) Erfinder: Forsbach, Heinz-Peter, 53797 Lohmar (DE); Krechel, Guido, 53804 Much (DE)
(74) Vertreter: Brandenburg, Thomas

(57) **Zusammenfassung**

Blasformsystem zur Herstellung von Hohlkörpern, umfassend eine Extrudereinrichtung (2) sowie wenigstens eine Blasformeinrichtung (10,20), wobei das Bett (12,22) liegend angeordnet und der Deckel (13,23) in Ladeposition über dem Bett seitlich versetzt angeordnet ist, das Bett (12,22) und der Deckel (13,23) an einem gemeinsamen Trägerkörper (11,21) angeordnet sind, wobei weiterhin in Ladeposition das Bett (12,22) von oben zugänglich und der Deckel (13,23) von unten oder seitlich zugänglich ist.

## Beschreibung

Die Erfindung betrifft ein Blasformsystem mit einer stationären Blasformeinrichtung oder wenigstens zwei verfahrbaren, alternierenden Blasformeinrichtungen, beschickt durch einen stationären Extruder, mit verkürzten Schließzeiten der jeweiligen Blasform. Weiterhin betrifft die Erfindung ein Verfahren zur Herstellung von Hohlkörpern unter Verwendung des genannten Systems.

Die Herstellung von Kunststoffformteilen aus thermoplastischen Kunststoffen mittels Blasformen ist seit langem bekannt. Grundsätzlich wird dabei das thermoplastische Material, das als Grundstoff für den späteren Hohlkörper dient, mittels eines Extruders erhitzt und einem Extruderkopf zugeführt. Im Extruderkopf wird das erweichte Material durch eine Ringdüse ausgestoßen und somit ein extrudierter Schlauch oder Hohlstrang gebildet. Ebenfalls sind Extruderköpfe mit zwei oder mehreren Düsenspalten, insbesondere konzentrischen Ringdüsenspalten bekannt, wobei die einzelnen Düsenspalten durch jeweils gesonderte Extruder beschickt werden. Im Ergebnis werden bei den zuvor genannten Extruderköpfen extrudierte Schläuche mit mehrschichtigem Aufbau erzeugt.

Im Folgendem wird bekanntermaßen der Schlauch abgeschnitten, wobei der so gewonnene Schlauchabschnitt einen Vorformling für die nachfolgende Blasverformung bildet. Der genannte Vorformling wird zur Blasverformung in eine geöffnete geteilte Hohlform eingelegt, die Hohlform geschlossen und der heiße und damit plastische Vorformling mittels Druckluft verformt. Bei der Verformung wird die Druckluft in den Innenraum des Vorformlings eingepreßt, wodurch dieser in seinem äußeren Umfang expandiert und sich an die inneren Konturen der geschlossenen Hohlform anpaßt. Nach hinreichendem Abkühlen erstarrt die thermoplastische Masse und bildet den so gewonnenen Hohlkörper. Zum Abschluß des Verfahrens wird die geteilte Hohlform geöffnet und der Hohlkörper entnommen sowie der weiteren Bearbeitung oder Verwendung zugeführt.

Das zuvor genannte herkömmliche Verfahren weist jedoch einige Nachteile auf. So ist der geschwindigkeitsbestimmende Schritt des Verfahrens, die Verweildauer des Vorformlings in der Blasform zur Herstellung des Hohlkörpers. Der zuvor genannte Zeitraum kann in der Regel kaum verkürzt werden. So sind beispielsweise Ausblasgeschwindigkeit und Abkühlzeit im Wesentlichen von den Eigenschaften des verwendeten Thermoplasten abhängig. Hieraus ergeben sich auch noch weitere Nachteile. So ist die Extrusionsgeschwindigkeit des zugehörigen Extruders auf die Arbeitsgeschwindigkeit der Blasform abzustimmen. Bekannte Maßnahmen hierzu sind die Verringerung der Extrusionsgeschwindigkeit oder ein diskontinuierliches Extrudieren, wobei die Hohlstrangabschnitte für den Vorformling auf Anforderung abschnittsweise extrudiert werden. Insbesondere bei der Herstellung von Hohlkörpern mit mehrschichtigen Wandungen ist jedoch in der Regel eine kontinuierliche Extrusion mit einer vorgegebenen Extrusionsgeschwindigkeit notwendig, um die Qualitätskriterien für die Bildung des Vorformlings hinreichend zu erfüllen.

So wurden bereits sogenannte Zwei-Stationen-Maschinen vorgeschlagen, bei denen durch den Extruderkopf zwei nebeneinander angeordnete horizontal verschiebbare Blasformen jeweils wechselsweise mit den schlauchartigen thermoplastischen Vorformlingen beschickt werden. Eine derartige Zwei-Stationen-Maschine wird in der DE 92 06 649 UI vorgeschlagen. Das Dokument offenbart eine Blasformmaschine mit zwei nebeneinander angeordneten horizontal verschiebbaren Blasformen, umfassend jeweils zwei verschiebbare Blasformhälften, welche durch einen Speicherkopf mit schlauchartigen thermoplastischen Kunststoff-Vorformlingen versorgt werden. Dabei sind die zwei Blasformen verschiebbar auf einem Maschinenrahmen gelagert, wobei zur Aufspannung der vier Blasformhälften ein Drei-Platten-System mit drei Formaufspannplatten dient. Der Maschinenrahmen ist als Tischrahmen ausgebildet und ausschließlich unterhalb der Blasformhälften angeordnet. Die Vorrichtung nach der DE 92 06 649 UI weist den Nachteil auf, das sie ausschließlich für Vorformlinge geeignet ist, die hängend in die Blasformen eingeführt werden.

Aufgabe der vorliegenden Erfindung ist es die Nachteile der Technik zu überwinden und ein Blasformsystem zur Herstellung von Hohlkörper bereitzustellen, daß einen verbesserten Stückdurchsatz ermöglicht. Weitere Teilaufgabe der vorliegenden Erfindung ist es ein Blasformsystem der zuvor genannten Art bereitzustellen, das liegende Vorformlinge bearbeitet.

Gelöst werden die Aufgaben nach den Merkmalen des unabhängigen Anspruches.

Das erfindungsgemäße Blasformsystem geht von Blasformsystemen umfassend eine Extrudereinrichtung, eine stationäre oder wenigstens zwei verfahrbare Blasformeinrichtungen aus. Die Extrudereinrichtung ist dabei erfindungsgemäß über Kopf angeordnet, d.h. der zu erstellende Hohlstrang wird oberhalb der Blasformeinrichtungen erstellt, so dass dieser unter Wirkung der Schwerkraft schlaff herunterhängt.

Die Extrudereinrichtung unterliegt erfindungsgemäß keinen weiteren Einschränkungen. Geeignet sind alle bekannten Extrudereinrichtungen zur Extrusion von thermoplastischen Kunststoffen. Dies umfaßt Extrudereinrichtungen mit einem einzigen Extruder sowie mit mehreren Extrudern zur Co-Extrusion. Diese geben die Möglichkeit, mehrschichtige Hohlstränge und damit folglich mehrschichtige Hohlkörper zu formen. Die Erfindung ist jedoch hierauf nicht beschränkt und die Auswahl der Extrusionseinrichtung kann durch den Fachmann ohne Weiteres in Abhängigkeit des zu schaffenden Hohlkörpers sowie der zu verwendenden thermoplastischen Materialien wählen.

Das erfindungsgemäße Blasformsystem umfaßt weiterhin eine stationäre Blasformeinrichtung oder wenigstens zwei verfahrbare Blasformeinrichtungen. Der Verfahrweg der Blasformeinrichtungen ist dabei so gewählt, dass das eine Ende des Verfahrweges im Wesentlichen unterhalb des Extrusionskopfes befindlich ist und das andere Ende des Verfahrweges so weit von dem ersten Ende des Verfahrweges beabstandet ist, dass hinreichend Raum geschaffen wird, um der wenigstens zweiten Blasformeinrichtung zu ermöglichen, sich in eine entsprechende Stellung unterhalb des Extrusionskopfes zu bewegen. Es versteht sich, daß dies sowohl eine Pendelbewegung der jeweiligen Blasformeinrichtung umfaßt, als auch eine Kreisbewegung, soweit die Blasformeinrichtung nach dem Verfahren aus ihrer Position unterhalb des Extruderkopfes im Kreis geführt und dann von der gegenüberliegenden Seite wieder unter den Extruderkopf gefahren wird.

In seiner einfachsten Ausführungsform besteht der Verfahrweg aus einem geraden Schienenabschnitt dessen Mitte sich unterhalb des Extrusionskopfes befindet. In dieser Ausführungsform werden die Blasformeinrichtungen alternierend unter den Extrusionskopf gefahren. Dabei ist die Ausfahrtrichtung der ersten Blaseinrichtung aus der Position unterhalb des Extrusionskopfes gleich der Einfahrtrichtung der zweiten Blaseinrichtung in die Stellung unter den Extrusionskopf und umgekehrt. Die Blaseinrichtungen können in dieser einfachsten Ausführungsform tandemartig miteinander verkoppelt werden oder einzeln in Ihrer Bewegung gesteuert werden.

Die Blaseinrichtungen selbst weisen in bekannter Weise zwei Formhälften zur Bildung der Kavität auf. Erfindungsgemäß ist dabei eine der Formhälften liegend angeordnet. Diese untere Formhälfte wird zum Zwecke der Beschreibung nachfolgend auch Bett genannt. Die mit dem Bett korrespondierende obere Formhälfte wird zum Zwecke der Beschreibung nachfolgend Deckel genannt. Weitergehende Einrichtungen zum Schließen des Deckels mit dem Bett sind dem Stande der Technik bekannt. Der Verschluß von Deckel und Bett wird nachfolgend Schließe genannt. In bekannter Weise formen Bett und Deckel zusammen eine Kavität, in die bei bestimmungsgemäßem Gebrauch der Vorformling eingelegt ist und in ebenfalls bekannter Weise zu dem gewünschten Hohlkörper ausgeblasen wird. Im Weiteren werden die jeweiligen durch das Bett und den Deckel gebildeten Halbformen, die im bestimmungsgemäßen Gebrauch die Kavität und die Negativform des zu bildenden Hohlkörpers bilden, als Deckelhalbform bzw. Betthalbform bezeichnet.

Ein weiteres Merkmal der erfindungsgemäßen Blasform besteht darin, dass das Bett und der Deckel im Arbeitsschritt der Beschickung des Bettes mit einem Vorformling geometrisch so angeordnet sind, dass die Betthalbform im Wesentlichen frei von oben zugänglich ist, während gleichzeitig ein freier Zugang zu der Deckelhalbform gewährleistet ist. Im einfachsten Fall kann der freie Zugang zur Deckelhalbform von unten gewährleistet werden, soweit Deckel und Bett gegenüber ihrer Schließstellung parallel zueinander verschoben oder verdreht sind. Soweit der Deckel alternativ oder zusätzlich eine Kipp- oder Drehbewegung ausführt, so dass er aus seiner ursprünglich horizontalen Ausrichtung herausgedreht oder gekippt wird, so kann die freie Zugänglichkeit der Deckelhalbform von der Seite ermöglicht werden.

Der zuvor genannte Kunstgriff ermöglicht es in vorteilhafter Weise, dass im gleichen Arbeitsschritt bei der Herstellung von Hohlkörpern sowohl das Bett mit einem Vorformling beschickt werden kann, während gleichzeitig im vorhergehenden Herstellungszyklus hergestellte Hohlkörper aus der Deckelhalbform entfernt, bzw. entformt werden können. Hieraus ergibt sich, dass zwei Verfahrensschritte, die nach dem Stande der Technik nacheinander ablaufen müssen, nämlich das Entformen des fertigen Hohlkörpers sowie das Einlegen des neuen Vorformlings nun zeitgleich durchgeführt werden können. Der sich daraus ergebende Vorteil besteht im Wesentlichen aus einer zeitlichen Verkürzung eines Arbeitszyklus für die Herstellung eines Hohlkörpers und damit eine erhöhte Produktion im gleichen Zeitraum.

Eine geeignete Ausführungsform besteht darin, dass die untere Formhälfte geeignet ist die Schließung der Kavität zu bewirken, nämlich durch Anheben und Anpressen des Bettes gegen die darüber befindliche obere Formhälfte.

Weiterhin ist es dabei wesentlich, dass der Deckel an einer beweglichen Trageeinrichtung angebracht ist, die ein Ausfahren oder Ausdrehen des Deckels aus seiner Position oberhalb des Bettes ermöglicht. Erfindungswesentlich ist dabei, dass der Deckel soweit seitlich von dem Bett beabstandet wird, dass ein freier Zugang des Bettes von oben möglich ist.

Das zuvor erläuterte Prinzip kann ohne Weiteres in der Funktionalität auch umgekehrt werden, nämlich dahingehend, dass die obere Formhälfte im Wesentlichen verharrt, während die untere Formhälfte unterhalb des Extrusionskopfes verschoben oder verdreht wird. Die technische Wirkung, nämlich dass das Bett und der Deckel soweit seitlich beabstandet sind, dass zum Einen der freie Zugang zur Deckelhalbform als auch zur Betthalbform gleichzeitig gewährleistet ist, wird hiermit ebenfalls erreicht.

Für die Zwecke der Beschreibung wird nachfolgend die Stellung des Deckels gegenüber dem Bett Ladestellung genannt, bei der sowohl Betthalbform als auch Deckelhalbform frei zugänglich sind. Soweit Bett und Deckel miteinander verschlossen sind, insbesondere zur Bildung der Kavität und des Ausblasens des Hohlkörpers wird diese Stellung Schließstellung genannt. Die Stellung bei der sich der Deckel oberhalb des Bettes befindet, aber beide voneinander senkrecht beabstandet sind, d.h. noch nicht geschlossen sind wird zum Zwecke der Beschreibung Vor-Schließstellung genannt. Der Begriff Vor-Schließ-Stellung impliziert dabei nicht eine nachfolgende Bewegung des Bettes oder des Deckels zum Bilden der Schließstellung, sondern kann auch die Stellung nach Öffnen der Schließstellung umfassen.

Für die Zwecke der Beschreibung wird die Stellung der Blasformeinrichtung unterhalb des Extrusionskopfes als Zentralstellung bezeichnet. Die Stellung der Blasformeinrichtung ausgefahren aus der zuvor genannten Zentralstellung wird Arbeitsstellung genannt.

Die Funktion des erfindungsgemäßen Blasformsystems wird nachfolgend anhand der einfachsten Ausführungsform mit zwei Blasformeinrichtungen sowie einem seitlich verfahrbaren oder ausdrehbaren Deckel erläutert. Ein Herstellungszyklus beginnt damit, daß die erste Blasformeinrichtung in die Zentralstellung unterhalb des Extrusionskopfes gefahren wird, wobei gleichzeitig der Deckel, d.h. die obere Formhälfte in die Ladestellung ausgefahren oder ausgedreht wird. Das Bett, d.h. die untere Formhälfte befindet sich jetzt im Wesentlichen unterhalb des Extrusionskopfes. Zeitgleich extrudiert der Extrusionskopf einen Hohlstrangabschnitt, der mittels bekannter Maßnahmen abgetrennt wird und so den Vorformling bildet. Geeignete Maßnahmen zum Abtrennen des Vorformlings bestehen im Abschneiden oder Düsenverschluß. Des Weiteren wird der Vorformling in das Bett gelegt. Geeigneter Weise wird hierzu ein Greifer, insbesondere Roboterarm, verwendet.

Die Anordnung des Bettes unterhalb des Extrusionskopfes ist von Vorteil, da der thermoplastische Vorformling nur über einen kurzen Weg vom Extrusionskopf bis ins Bett zurücklegen muß. Gleichzeitig ist die Wegstrecke im Wesentlichen von oben nach unten gerichtet, was Verwerfungen oder Verformungen des Vormformlinges durch die Wirkung der Schwerkraft im Wesentlichen vermeidet.

Nach Einlegen des Vorformlings in das Bett wird die Blasformeinrichtung aus der Zentralstellung in die Arbeitsstellung verfahren. Vorzugsweise zeitgleich wird der Deckel aus der Ladestellung in die Schließstellung verfahren.

Unmittelbar nach Verschluß des Bettes mit dem Deckel und damit der Bildung der Kavität kann der Ausblasvorgang mit nachfolgendem Abkühlvorgang beginnen.

Zeitgleich mit dem Ausfahren der ersten Blaseinrichtung aus der Zentralstellung in die Arbeitsstellung kann die zweite Blasformeinrichtung aus ihrer Arbeitsstellung in die Zentralstellung eingefahren werden, wobei vorzugsweise gleichzeitig, der Deckel aus der Schließstellung in die Ladestellung ausgefahren oder ausgedreht wird. Nach Einfahren in die Zentralstellung steht die zweite Blasformeinrichtung zur Beladung mit einem Vorformling bereit. Zwischenzeitig wird durch die Extrusionseinrichtung weiterhin ein Hohlstrang erzeugt, der damit zum Abschnitt und zur Bildung eines Vorformlinges bereit steht. Es schließen sich jetzt die entsprechenden Arbeitsschritte an, wie sie zuvor zur ersten Blasformeinrichtung beschrieben wurden.

Der erste Arbeitszyklus für die erste Blasformeinrichtung endet mit dem Einfahren der Blasformeinrichtung aus der Arbeitsstellung in die Zentralstellung und vorzugsweise gleichzeitigem, Öffnen des Deckels und Verfahrens oder Verdrehens des Deckels in die Ladestellung.

Nach Öffnen der Kavität bleibt der geformte Hohlkörper an dem Deckel haften und wird mit diesem ausgedreht oder ausgefahren. Geeignete Maßnahmen, um das Anhaften des fertigen Hohlkörpers an dem Deckel sicher zu stellen, sind dem Fachmann bekannt. Beispielsweise kann dies durch die Gestaltung der beiden Blasformhälften geschehen, so dass der fertige Hohlkörper sich ohne Weiteres von der Betthalbform löst. Gegebenenfalls kann dies durch das Einfügen von Sicken oder Hinterschneidungen in der Deckelhalbform geschehen.

Der Vorteil hieraus liegt auf der Hand. Nach Ausfahren oder Ausdrehen des Deckels steht das Bett bereit zur neuerlichen Beschickung mit dem Vorformling. Gleichzeitig mit der Beschickung durch den Vorformling kann der fertige Hohlkörper, gebildet in dem vorgehenden Arbeitszyklus mit geeigneten Maßnahmen aus dem ausgedrehten Deckel entnommen werden. Insofern kann es zu einer zeitlichen Überschneidung der Vorgänge der einzelnen Herstellungszyklen kommen und damit zu einer zeitlichen Verkürzung des Produktionsablaufes.

Der Vorteil wird insbesondere deutlich im Vergleich zu herkömmlichen Blaseinrichtungen, wonach nach Öffnen der Kavität der gefertigte Hohlkörper erst entnommen werden muß, um Raum für den nachfolgenden Vorformling zu schaffen. Die nach dem Stand der Technik nacheinander ablaufenden Arbeitsschritte des Entnehmens des fertigen Hohlkörpers und Einführens des Vorformlings können bei der erfindungsgemäßen Vorrichtung zeitgleich ablaufen.

Die Vorteile der vorliegenden Erfindung werden nachfolgend anhand der Figuren erläutert. Dabei bezeichnen jeweils gleiche Bezugszeichen gleiche technische Merkmale. Dargestellt ist jeweils eine bevorzugte Ausführungsform der Erfindung mit zwei Blasformeinrichtungen.
- Figur 1: zeigt eine perspektivische Darstellung einer bevorzugten Ausführungsform des erfindungsgemäßen Blasformsystems, mit zwei Blasformeinrichtungen mit verschiebbaren Deckeln;
- Figur 2: zeigt eine Draufsicht der Ausführungsform nach Figur I;
- Figur 3: zeigt eine Seitenansicht der Ausführungsform nach Figur I.
- Figur 4: zeigt eine perspektivische Darstellung einer weiteren Ausführungsform des erfindungsgemäßen Blasformsystems mit Blasformeinrichtungen mit verschiebbarem Bett;
- Figur 5: zeigt eine Draufsicht der Ausführungsform nach Figur 4;
- Figur 6: zeigt eine Detailansicht der Blasformeinrichtung nach Figur 4.

Figur I zeigt das erfindungsgemäße Blasformsystem umfassend eine Extrudereinrichtung 2 sowie zwei Blasformeinrichtungen 10, 20. Die Extrudereinrichtung 2 umfaßt in der dargestellten Ausführungsform mehrere Extruder 4a, 4b, 4c mündend in einem gemeinsamen Extruderkopf 5. Die dargestellte Ausführungsform ist zur Co-Extrusion von mehrlagigen Vorformkörpern geeignet. Die Extruder 4, 4a, 4c sind auf einem Gestell 3 angeordnet, das hoch genug ist, um den Extruderkopf 5 in hinreichender Höhe anzuordnen, um das Ein- und Ausfahren der Blasformeinrichtungen 10, 20 unterhalb des Extruderkopfes zu ermöglichen sowie hinreichend Arbeitsraum für den Greifarm 6 zu bilden. Der Greifarm 6 mit der Greifeinrichtung 7 ist in der dargestellten Ausführungsform als Roboterarm ausgebildet. Der Abschnitt des Hohlstranges (nicht gezeigt) bildet dann den Vorformling, der durch den Greifarm 6 gehalten wird.

Die Blasformeinrichtungen 10, 20 sind auf einem gemeinsamen Schienenpaar 8 angeordnet und können jeweils auf dem Schienenpaar unter den Extrusionskopf 5 gefahren werden. Dabei bezeichnet der Buchstabe F die Zentralstellung, d.h. die Stellung unterhalb des Extrusionskopfes. Die Buchstaben G und G' bezeichnen die Arbeitsstellungen der zweiten Blaseinrichtung, bzw. der ersten Blaseinrichtung. Das Verfahren der Blaseinrichtung 10, 20 auf dem Schienenpaar 8 kann mit bekannten Antriebsmitteln wie Elektromotoren oder hydraulischen oder pneumatischen Antriebsmitteln bewirkt werden.

Die Blasformeinrichtungen 10, 20 umfassen jeweils einen Trägerkörper 11, 21, der die Form eines Kastens oder Tisches haben kann. Im oder am Trägerkörper sind die Mittel zum Antrieb der Blaseinrichtungen angeordnet (nicht gezeigt). Ebenfalls sind dort die an sich bekannten Mittel für das Ausblasen des Vorformlinges angeordnet (nicht gezeigt). Zum Zwecke der zeichnerischen Übersicht sind ebenfalls elektrische, pneumatische und/oder hydraulische Zu- und Ableitungen nicht dargestellt.

Auf der Oberseite des Trägerkörpers 11, 21 ist das jeweilige Bett 12, 22 angebracht, versehen mit Hubeinrichtung zur Schließung der Kavität. Seitlich des Bettes befinden sich Schienen oder ähnliches 15, 25 auf denen die Trageeinrichtungen 14, 24 beweglich angeordnet sind. Hier in Form von Holmen, die sich über das jeweilige Bett 12, 22 erstrecken. Die Trageeinrichtungen 14, 24 tragen jeweils die Deckel 13, 23 und sind mit Hubeinrichtungen (nicht gezeigt) zum Anheben und Senken der Deckel 13, 23 versehen.

Die Trageeinrichtungen 14, 24 sind in ihrer Form nicht auf die dargestellte Ausführungsform beschränkt. So können die Hubeinrichtungen auch in Form von einzelnen Tragearmen realisiert werden, die ein Ausdrehen des Deckels aus der Schließstellung oder Vor-Schließstellung in die Ladestellung ermöglichen. Erfindungswesentlich ist dabei, daß ein freier Zugang des Bettes von oben für den Greifarm 6 mit dem Vorformling ermöglicht wird.

In der Darstellung befindet sich die Blasformeinrichtung 10 in der Zentralstellung F, wobei der Deckel 13 mittels der Trageeinrichtung 14 in Ladestellung gebracht ist. Die Trageeinrichtung 14 hat hierzu den Deckel 13 aus der Vor-Schließstellung, d.h. aus seiner Stellung aus der gedachten Linie zwischen Bett und Extrusionskörper, seitlich ausgefahren.

Der Deckel ist damit von unten frei zugänglich um den im vorherigen Arbeitszyklus gebildeten Hohlkörper zu entnehmen. Gleichzeitig ist das Bett frei zugänglich um den zeitgleich oder nahezu zeitgleich gebildeten Vorformling in das Bett einzulegen.

Nach Einlegen des Vorformlings in das Bett 12 sowie Entnehmen des Hohlkörpers aus dem Deckel 13 wird der Deckel 13 aus der Ladestellung in die Vor-Schließstellung verfahren, sowie das Bett zur Schließung der Kavität (Schließstellung) angehoben. Zeitgleich fährt der Tragekörper 11 aus der Zentralstellung F in die Arbeitsstellung G' . Wie zuvor ausgeführt beginnt der Blasvorgang unmittelbar nach Schließen des Deckels mit dem Bett.

Ebenfalls zeitgleich wird die Trageeinrichtung 21 aus ihrer Arbeitsstellung G in die Zentralstellung F verfahren sowie der Deckel 23 von dem Bett 22 gelöst und in die Vor-Schließstellung angenommen. Sobald hinreichender Abstand zwischen Deckel und Bett gewährleistet ist, verfährt die Trageeinrichtung 24 über die Schienen 25 in Richtung Ladestellung. Mit Erreichen der jeweiligen Endposition nimmt die Blasformeinrichtung 20 damit die ursprüngliche Stellung der Blasformeinrichtung 10 ein. Es schließen alternierend sich die entsprechenden Arbeitsschritte in der zuvor genannten Reihe an.

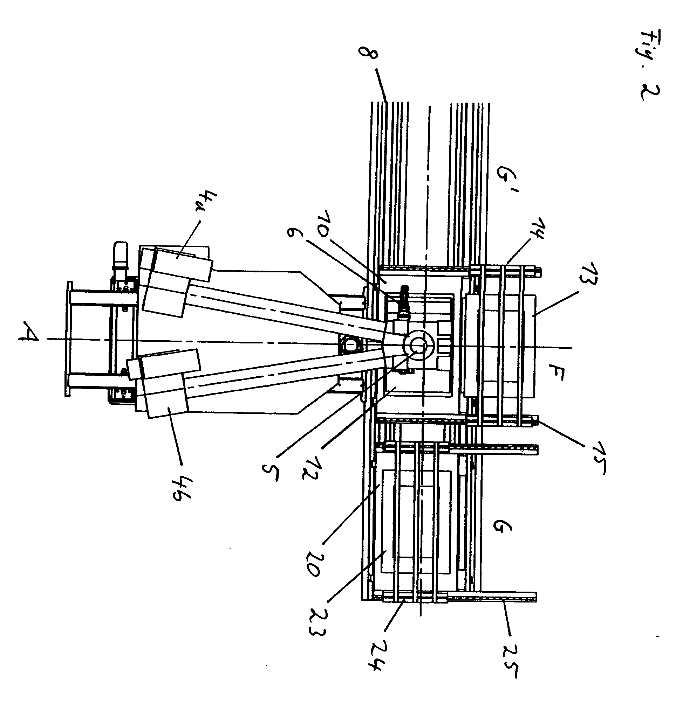

Figur 2 zeigt die Draufsicht der Ausführungsform einer Figur I. Die Blasformeneinrichtungen 10, 20 sind in den gleichen Arbeitsstellungen dargestellt. Aus der Figur ist ersichtlich wie erfindungsgemäß der Extruderkopf 5 oberhalb des liegenden Bettes 12 angeordnet ist, während sich die Blasformeinrichtung 10 in der Zentralstellung F befindet. Gleichzeitig ist der Deckel 13 mittels Wirkung der Tragevorrichtung 14 so ausgefahren (Ladestelllung), daß der Beschickungsvorgang mit dem Vorformling möglich ist.

Aus dieser Figur wird besonders ein weiterer Vorteil der Ausführungsform der vorliegenden Erfindung mit zwei alternierenden Blasformen ersichtlich. In dieser Ausführungsform ist nur eine Entnahmeeinrichtung (nicht gezeigt) für den fertigen Hohlkörper nötig, die den gebildeten Hohlkörper aus dem Deckel 13 übernimmt. In dieser Ausführungsform sind die Extrusionseinrichtung (2), die Zentralstellung F sowie die Entnahmeeinrichtung für den gefertigten Hohlkörper (nicht gezeigt) in einer Linie angeordnet, dargestellt durch die zeichnerische Linie A.

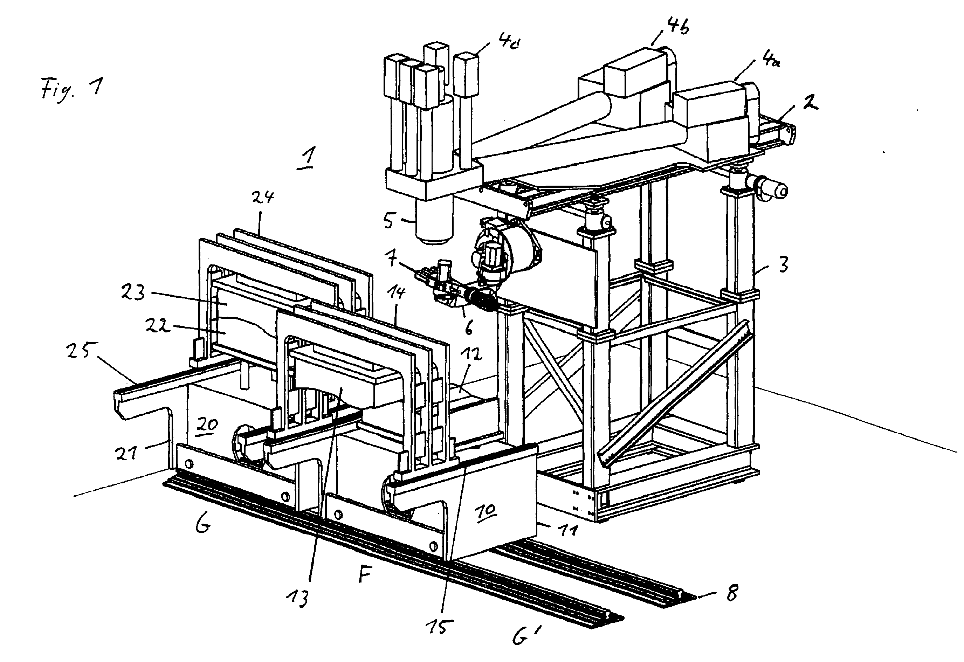

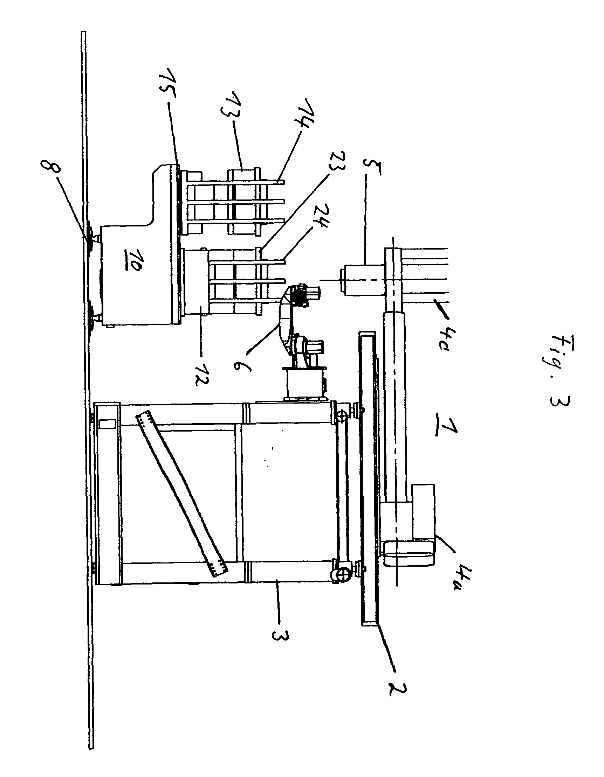

Figur 3 zeigt eine Seitenansicht des erfindungsgemäßen Systems entsprechend der Figuren 1 und 2. Dabei befindet sich die Blasformeinrichtung 10 in der Zeichenebene und die Blasformeinrichtung 20 hinter der Zeichenebene.

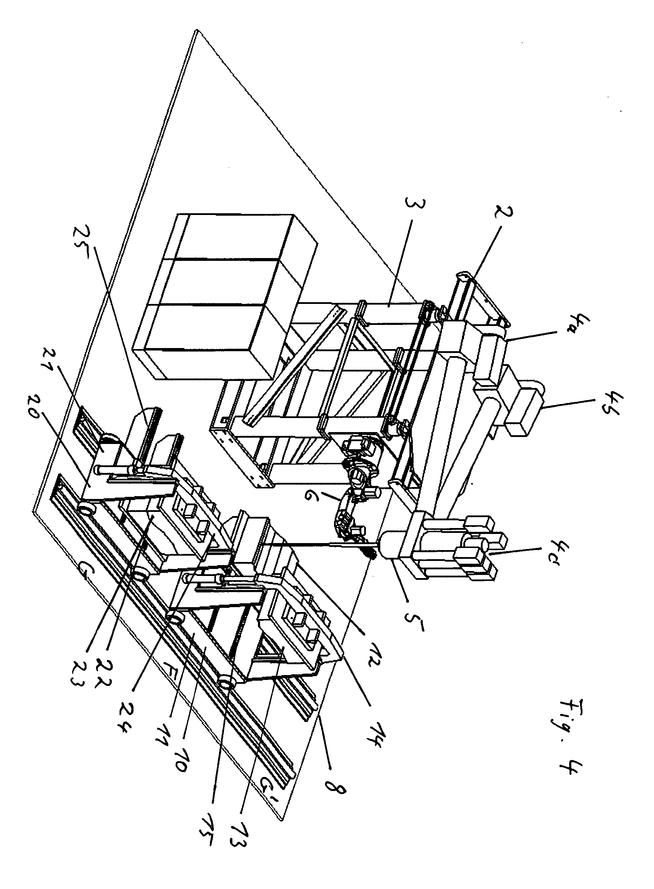

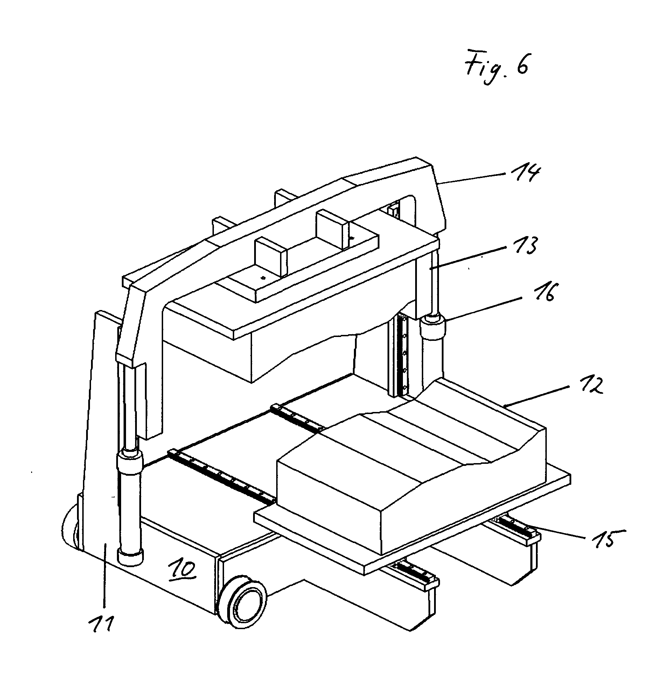

Figur 4 zeigt eine weitere Ausführungsform des erfindungsgemäßen Blasformsystems umfassend eine Extrudereinrichtung 2 sowie zwei Blasformeinrichtungen 10, 20. Figur 4 weicht von der Darstellung der Figur 1 in der Ausgestaltung der Blasformeinrichtungen 10, 20 ab. Die verbleibenden Baugruppen und Elemente sind identisch mit denen nach Figur 1, auf dessen Beschreibung hier Bezug genommen wird. Die Ausführungsform nach Figur 4 unterscheidet sich von der Ausführungsform nach Figur 1 in der Ausgestaltung der Führung und Bewegung der Blasformhälften der Blasformeinrichtungen 10, 20. Übergehend zu Figur 6 wird nachfolgend die Baugruppe der Blasform anhand der dargestellten Einzelvergrößerung erläutert. Die Blasform 10 stellt eine Ausführungsform dar, bei der das Bett 12 parallel verschoben werden kann. In der dargestellten Ausführungsform wird das Bett 12 aus dem Trägerkörper II mittels Tischschienensystem 15 parallel verschoben. In nicht dargestellten Ausführungsformen ist auch ein Ausdrehen des Bettes oder ein parallel Verschieben mithilfe andersartiger geeigneter und bekannter Mittel möglich.

Der Deckel 13 wird von der Trageeinrichtung 14 getragen. Weiterhin umfasst die Trageeinrichtung 14 Schließmittel 16 um die Schließung der Kavität zu bewirken. Die dargestellte Ausführungsform zeigt Schließmittel in Form von Hydraulikeinrichtungen. Alternativ kann der Deckel 13, bzw. die Trageinrichtung 14 starr ausgeführt werden. In einem solchen Fall würde eine entsprechende Schließeinrichtung so ausgebildet werden, daß das Bett gemäß der Ausführungsform nach Figur I bis 3 in den Deckel zum Schließen der Kavität gehoben wird.

Zurückkommend auf Figur 4 wird nachfolgend das Verfahren zur Herstellung von Hohlkörpern mit der dargestellten Ausführungsform erläutert. Gemäß Figur 4 befindet sich die Blasform 10 in der Zentralstellung F. Deckel 13 und Bett 12 nehmen dabei die Ladestellung ein, wobei das Bett 12 mittels Tischschienensystem 15 unterhalb des Extruderkopfes 5 verfahren ist. Die Blasformeinrichtungen 10, 20 können auf dem Schienensystem 8 quer verfahren werden, um die Zentralstellung F sowie die Arbeitsstellung G und G' einzunehmen. Es ergibt sich von selbst, dass in der dargestellten Ausführungsform mit verschiebbarem Bett das Schienensystem 8 um den Ausfahrweg des Bettes 12 gegenüber der Ausführungsform nach Figur 1 verschoben sein muß.

Das Bett 12 der Blasformeinrichtung 10 kann nun in bekannter und zuvor ausgeführter Weise mit einem Vorformling bestückt werden. Gleichzeitig ist der Deckel 13 von unten zugänglich, wodurch mittels geeigneter Maßnahmen wie beispielsweise einem weiteren Fertigungsroboter der ausgeblasene Hohlkörper, hergestellt in dem zuvor verlaufenden Produktionszyklus aus der oberen Formhälfte entnommen werden kann. Gegebenenfalls kann der Deckel 13 in allen Ausführungsformen zur Entformung des Formkörpers auch gekippt oder gedreht werden, um eine bessere Zugänglichkeit zu dem in der oberen Formhälfte befindlichen Hohlkörpers zu ermöglichen.

Nach der Beladung der unteren Formhälfte, bzw. des Bettes 12 mit dem Vorformling sowie der Entformung des fertigen Hohlkörpers aus dem Deckel 13 folgen, vorzugsweise zeitgleich, folgende Verfahrensschritte. Das Bett 12 wird aus der Position unterhalb des Extruderkopfes in die Vor-Schließstellung verfahren, wobei das Bett 12 sich in Richtung unterhalb des Deckels 13 bewegt. Weiterhin verfährt die Blasformeinrichtung 10 aus der Zentralstellung F in die Arbeitsstellung G'. Nach Erreichen der Vor- Schließstellung schließen der Deckel 13 sowie das Bett 12 zur Bildung der Kavität mit anschließendem Ausblasen des Vorformlings zur Bildung des Hohlkörpers.

Ebenfalls vorzugsweise zeitgleich mit den zuvor genannten Verfahrensschritten fährt die Blasformeinrichtung 20 aus der Arbeitsstellung G in die Zentralstellung F, wobei weiterhin sich die Schließe, gebildet durch den Deckel 23 sowie das Bett 22 öffnet und somit die Vor-Schließstellung bildet. Weiterhin wird dann das Bett 22 aus der Vor-Schließstellung in die Ladestellung verfahren. Die Blasformeinrichtung 20 nimmt damit die Position ein, die die Blasformeinrichtung 10 zu Beginn der Verfahrensschritte hatte. Die Verfahrensschritte für die Blasformeinrichtung 20 schließen sich an, wie sie zuvor für die Blasformeinrichtung 10 beschrieben wurden und umgekehrt.

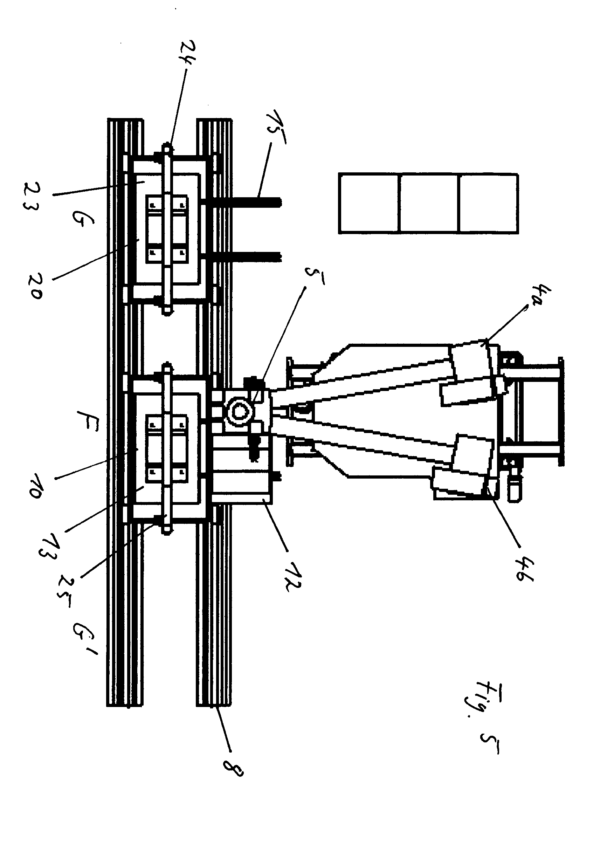

Figur 5 zeigt eine Draufsicht auf die Ausführungsformen nach Figur 4. Aus Figur 5 ist insbesondere das Ausfahren oder Ausdrehen des Bettes 12 unter den Extruderkopf 5 ersichtlich. Ebenfalls ergibt sich aus der Darstellung, dass bei dieser Ausführungsform das Schienensystem 8 nicht unter dem Extruderkopf hindurchläuft, sondern vielmehr um den Ausfahrweg des Bettes 12, bzw. 24 verschoben sein muss.

In einer weiteren Ausführungsform kann das Bett 12, 24 jeweils mit einer Mimik versehen werden, um eine Bewegung in der X- und Y-Ebene ausführen zu können. Die XY-Ebene liegt dabei parallel zur Bettebene. Die Mimik kann durch geeignete und bekannte Maßnahmen aufgebaut sein, beispielsweise mittels zweier Hydrautikzylinder, die im Wesentlichen rechtwinklig zueinander angeordnet und jeweils einzeln ansteuerbar sind. Geeigneter Weise bilden die Mimik und das Bett 12, 24 eine gemeinsame Baugruppe, die entsprechend den zuvor gemachten Ausführungen den jeweiligen Trägerkörpern 11, 21 der Blasformeinrichtungen 10, 20 zugeordnet sind.

Die Mimik erlaubt dem Bett nach oder bei dem Einnehmen der Ladeposition eine allen anderen Bewegungen überlagerte Feinbewegung durchzuführen, wobei jeder Punkt des Bettes 12, 24 unter die Lotrechte des Extruderkopfes 5 bewegt werden kann. Die sich hieraus ergebenden Vorteile werden anhand des Beispieles eines zu formenden S-förmigen Hohlkörpers erläutert. Hierbei weist die Betthalbform eine entsprechende S-förmige Ausnehmung auf, zur Aufnahme des Vorformlings, welche sich im Wesentlichen über die gesamte Länge des Bettes erstreckt. Mittels des Einsatzes der Mimik ist es möglich den Vorformling in der Lotrechten vom Extruderkopf mittels geeigneter Mittel wie einer Greifeinrichtung herabzulassen, wobei das eine Ende des länglichen Vorformlings in das korrespondierende Ende der S-förmigen Halbform eingelegt wird. Im weiteren Einlegevorgang wird dann das jeweilige Bett 12, 24 unter Wirkung der Mimik in der XY-Ebene entsprechend der Ausformung der Formhälfte verfahren, während gleichzeitig der längliche Vorformling weiter ins Bett eingelegt wird. Anders ausgedrückt wird mittels der Mimik die Bewegung in der XY-Ebene vollzogen, die zum Einlegen des Vorformlings ins Bett notwendig ist und nach dem Stande der Technik durch den Greifarm, bzw. manuell mit dem Vorformling selbst durchgeführt werden muss. Der Vorformling selbst muss bei dieser Ausführungsform im Wesentlichen nur die senkrechte Bewegung vom Extruder zum Bett durchlaufen. Es ergibt sich hieraus der Vorteil, dass der Greifarm 6 ebenfalls nur noch eine Bewegungsrichtung, nämlich in Z-Ebene durchführen muss und dementsprechend konstruktiv einfacher und kostengünstiger ausgeführt sein kann.

In der Ausführungsform bei der das Bett ausgedreht oder ausgefahren wird kann eine der zuvor beschriebenen Mimik erzeugte Wirkung auch durch ein koordiniertes Ansteuern der Verfahreinrichtungen der Blasformeinrichtung sowie der im wesentlichen senkrecht hierzu wirkenden Verfahreinrichtungen des Bettes erzeugt werden. Wesentlich ist dabei, daß die maximalen Verfahrwege so ausgelegt sind, daß jeder Punkt des Bettes unterhalb des Extruderkopfes verfahren werden kann.

In einer weiteren nicht dargestellten Ausführungsform kann das erfindungsgemäße Blasformsystem mit drei oder mehr alternierenden Blasformeinrichtungen versehen sein. Bei der Ausführungsform mit drei Blasformeinrichtungen kann beispielsweise die dritte Blasformeinrichtung von vorne auf den Extruder zugefahren werden. Dies entspricht der Linie A in der Figur 2. Das Schienensystem zur Führung der Blaseinrichtungen wäre dementsprechend T-förmig ausgeführt. Die Verwendung und Zuführung von vier oder mehr Blasformen zur Extrudereinrichtung erschließen sich dem Fachmann ohne Weiteres.

Weiterhin umfaßt die vorliegende Erfindung eine weitere Ausführungsform, umfassend einen weiteren zusätzlichen Arbeitsschritt bei der Herstellung der Hohlkörper. So kann erfindungsgemäß auch die Entnahme des fertigen Hohlkörpers geschehen, soweit die Blasformeinrichtung sich in der Arbeitsstellung G befindet. Diese Ausführungsform ist ein weiterer Verfahrenschritt notwendig, nämlich das Öffnen der Kavität und Verfahren oder Ausdrehen des Deckels in die zuvor beschriebene Ladestellung. In dieser Ausführungsform dient das Verfahren oder Ausdrehen des Deckels in die Ladestellung ausschließlich dazu, den im Deckel befindlichen Hohlkörper zur Entnahme bereitzustellen. Anschließend erfolgt das Einfahren der Blasformeinrichtung in die Zentralstellung zur Beschickung mit dem Vorformling.

Während des Einfahrens in die Zentralstellung kann der Deckel wahlweise in Ladestellung verbleiben oder zwischenzeitig in Schließstellung oder Vor-Schließstellung eingefahren oder eingedreht werden.

In seiner einfachsten Ausführungsform umfasst das erfindungsgemäße Blasformsystem nur eine einzige Blasform, die stationär angeordnet ist. Diese Anordnung entspricht der Zentralstellung F. In dieser einfachsten Ausführungsform entfallen die Arbeitschritte des Verfahrens der Blasformeinrichtung.
- I: Blasformsystem
- 2: Extrudereinrichtung
- 3: Extrudergestell
- 4, 4a, 4b, 4c: Extruder
- 5: Extruderkopf
- 6: Greifarm
- 7: Greifenrichtung
- 8.: Schienensystem
- 10, 20: Blasformeinrichtungen
- 11, 21: Trägerkörper
- 12, 22: Untere Formhälfte/Bett
- 13,23: Obere Formhälfte/Deckel
- 14,24: Trageinrichtung
- 15, 25: Tischschienensystem

- A: Orientierungslinie
- F: Zentralstellung
- G, G': Arbeitsstellung

## Patentansprüche

1. Blasformsystem zur Herstellung von Hohlkörpern, umfassend eine Extrudereinrichtung (2) sowie wenigstens eine Blasformeinrichtung (10,20), **dadurch gekennzeichnet, dass** das Bett (12,22) liegend angeordnet und der Deckel (13,23) in Ladeposition über dem Bett seitlich versetzt angeordnet ist, das Bett (12,22) und der Deckel (13,23) an einem gemeinsamen Trägerkörper (11,21) angeordnet sind, wobei weiterhin in Ladeposition das Bett (12,22) von oben zugänglich und der Deckel (13,23) von unten oder seitlich zugänglich ist.

2. Blasformsystem nach einem der vorhergehenden Ansprüche, **dadurch gekennzeichnet, dass** der Deckel (13,23) so ausgestaltet ist, das der geformte Hohlkörper nach Öffnen der Kavität im Deckel (13,23) verbleibt.

3. Blasformsystem nach einem der vorhergehenden Ansprüche, **dadurch gekennzeichnet, dass** das System wenigstens zwei Blasformeinrichtungen (10,20) aufweist, wobei die Blasformeinrichtungen (10,20) alternierend unter die Extrudereinrichtung verfahrbar sind

4. Blasformsystem nach Anspruch 4, **dadurch gekennzeichnet, dass** die Blasformeinrichtungen (10,20) auf Schienen (8) angeordnet sind.

5. Blasformsystem nach einem der vorhergehenden Ansprüche, **dadurch gekennzeichnet, dass** die Extrusionseinrichtung (2), die Zentralstellung (F) der Blasformeinrichtung und die Einrichtung zur Entnahme des Hohlkörpers in einer Line (A) angeordnet sind.

6. Blasformsystem nach einem der vorhergehenden Ansprüche, **dadurch gekennzeichnet, dass** das Bett (12,22) seitlich ausfahrbar oder ausdrehbar ist.

7. Blasformsystem nach einem der Ansprüche 1 bis 5, **dadurch gekennzeichnet, dass** der Deckel (13,23) seitlich ausfahrbar oder ausdrehbar ist.

8. Blasformsystem nach einem der vorhergehenden Ansprüche, **dadurch gekennzeichnet**, das das Bett (12,22) eine Mimik für eine Bewegung in der XY-Ebene aufweist.

9. Verfahren zur Blasformung von Hohlkörpern mit einer Vorrichtung nach einem der vorhergehenden Ansprüche, **gekennzeichnet durch** die Schritte:
a) Verfahren einer ersten Blasformeinrichtung (10,20) in die Zentralstellung (F) und Verfahren oder Ausdrehen des Deckel (13,23) oder des Bettes (12,22) in die Ladestellung;
b) Entnahme des Hohlkörpers aus dem Deckel (13,23), der ersten Blasformeinrichtung (10,20), gebildet in dem vorhergehenden Zyklus;
c) Beschicken des Bettes (12,22) der ersten Blasformeinrichtung (10,20) mit einem Vorformling;
d) Einfahren oder Eindrehen des in Schritt a) Ausgedrehten oder Ausgefahrenen Deckels (13,23) oder Bettes (12,22) in die Schließstellung
e) Verfahren der ersten Blasformeinrichtung in die Arbeitsstellung (G,G')
f) Verfahren einer zweiten Blasformeinrichung (10,20) in die Zentralstellung (F) und Verfahren oder Ausdrehen des Deckel (13,23) oder Bettes (12,22) in die Ladestellung;
g) Entnahme des Hohlkörpers aus dem Deckel (13,23), der zweiten Blasformeinrichtung (10,20), gebildet in dem vorhergehenden Zyklus;
h) Beschicken des Bettes (12,22) der zweiten Blasformeinrichtung (10,20) mit einem Vorformling;
i) Einfahren oder Eindrehen des in Schritt f) Ausgedrehten oder Ausgefahrenen Deckels (13,23) oder Bettes (12,22) in die Schließstellung;
j) Verfahren der zweiten Blasformeinrichtung in die Arbeitsstellung (G,G');
k) Wiederholen der Verfahrensschritte a) bis j)

10. Verfahren nach Anspruch 9, **dadurch gekennzeichnet, dass** die Verfahrensschritte b), c) und/oder d), e) und/oder g), h) und/oder i), j) jeweils zeitgleich durchgeführt werden, insbesondere die Verfahrensschritte b), c) und g), h).

11. Verfahren nach einem der Ansprüche 9 oder 10, **dadurch gekennzeichnet, dass** das Bett (12,22) beim Beschicken mittels einer Mimik in der XY-Ebene verfahren wird.
